# EUROPEAN PATENT SPECIFICATION

(11) **EP 2 423 543 B1**
(45) Date of publication and mention of the grant of the patent: **06.03.2013**
(21) Application number: 10008798.0
(22) Date of filing: 24.08.2010
(51) Int. Cl.: F16K 1/38, B29C 49/42

(54) **Blowing fluid valve for a blow molding device, blow molding device and method of blow molding**
Blasflüssigkeitsventil für eine Blasformvorrichtung, Blasformvorrichtung und Blasformverfahren
Vanne de fluides à soufflage pour dispositif de moulage par soufflage, dispositif de moulage par soufflage et procédé de moulage par soufflage

(43) Date of publication of application: 29.02.2012
(73) Proprietor: Robert Bosch GmbH, 70469 Stuttgart (DE)
(72) Inventor: Pimouguet, Oliver, 74130 Vonneville (FR)
(74) Representative: Thürer, Andreas

(56) References cited:
- DE-B3-102008 015 776
- FR-A1- 2 872 082
- US-A- 4 150 689
- US-B2- 6 932 102

## Description

The current invention relates to a blowing fluid valve for providing a blowing fluid in a blow molding device, to a corresponding blow molding device and to a corresponding blow molding method.

### Prior Art

While the current invention will be described with a focus on injection blow molding ' (IBM) for the production of containers, such as bottles, from plastic preforms, it should be understood that the invention can also be advantageously used in other manufacturing processes utilizing variable blowing fluid pressures, including, but not limited to, extrusion blow molding (EBM) and stretch blow molding (SBM).

The manufacture of containers, such as plastic (PET) bottles from preforms by blow molding is well known. PET preforms are typically manufactured by injection molding and provide, due to their small size, advantages in transport and storage. Such preforms can be, on site, blown into various shapes according to customer's needs.

Before being blown so as to take up the form of a container, the preform undergoes appropriate heat treatment in a thermal conditioning oven.

The preform is then received in a mold containing the impression of the container to be obtained and, during the blowing step, a blowing fluid, generally air at high pressure (e.g. 40 bar), is injected via a nozzle into the preform in order to inflate the preform and to press the material against the walls of the mold, whereby the shape of the container is obtained.

Typically, previously to the "final" blowing step explained above, the blowing method includes a stretching or elongation step in which the preform is stretched or elongated by means of a stretching rod associated with the mold and being controlled so as to slide toward the bottom of the preform, and/or a preblowing step at lower pressure.

After blowing and cooling the formed container below the PET glass transition temperature, the mold is expanded.

The operation of a blow molding device is relatively complex, in particular due to the large number of parameters liable to influence the quality of the containers obtained. To yield high quality products and to avoid losses in raw material, it is essential, e.g., to provide proper control of the air flow during preblowing, of the pressure which the container is subjected to in the final blowing, and of the reduction in pressure during the expansion step before the blown article is removed from the mold.

In other words, providing controlled blowing fluid flow and/or pressure during preblowing, final blowing and expansion is of utmost importance to provide adequate results.

US 6,932,102 B2 discloses a device for regulating the flow rate and/or the pressure of a fluid transferred from a high-pressure reservoir (a pressure source) to a reservoir (a blow mold), the device comprising a first valve provided with a control mounted in a pipe connecting the two reservoirs, a Laval nozzle located downstream of the first valve and provided with an electric pressure-drop sensor, a second valve provided with a control connected between the downstream part of the Laval nozzle and an exhaust orifice, and a programmed system designed to receive the values read by the pressure-drop sensor and to drive the two controls of the two valves so as to regulate the flow rate and/or the pressure of the fluid transferred from the first reservoir to the second reservoir.

While US 6,932,102 B2 enables for a control of blowing fluid flows and/or pressures during the above-mentioned phases of blow molding, the disclosed device has to be considered disadvantageous because of its complex design and control requirements.

US 4,150,689 A1 discloses another known valve, respectively method, used in blow molding.

Therefore, there is a need for reliable, simple and cost-effective ways to regulate blowing fluid flows and/or pressures during a blow molding process which are suitable to overcome the disadvantages of the prior art.

### Disclosure of the Invention

According to the invention, a blowing fluid valve for providing a blowing fluid in a blow molding device, a corresponding blow molding device and a corresponding method of blow molding comprising the features of the independent claims is provided. Preferred embodiments are subject matter of the dependent claims.

### Advantages of the Invention

In contrast to conventional blow molding devices, wherein typically on/off valves are used for the provision of blowing fluids, according to the invention a regulated and controlled delivery of blowing fluid flows and/or pressures is possible.

Conventionally, when using on/off valves in blow molding, several blowing fluid pressure implementations are required, e. g. including a 40 bar pressure source (for final blowing), a 15 bar source (for preblowing) and a further 7 bar source (for piloting or actuating). In such implementations, one valve per pressure phase needs to be provided. In contrast to these complex configurations as known from prior art, the current invention enables to provide different blowing pressures and/or fluid flows with a single device.

Essentially, according to the invention, a differential blowing fluid flow and/or pressure may be provided with minimum constructive and control effort with a single device, which is actuated by a conventional pressure actuating device. By using only one pressure implementation (e.g. a 40 bar source) and by down-regulating the source pressure inside of the inventive valve (for preblowing and blowing) and of an integrated pressure restrictor (for piloting), significant cost advantages may be realized. However, the provision of several types and/or configurations of valves, including Laval nozzles, etc. as disclosed in US 6,932,102 B2 is not required.

An inventive dual element coaxial valve may be mounted and/or exchanged as a single unit and is therefore user and service friendly. By use of the inventive valve, a regulation of the blowing fluid flow during the preblowing phase, and a regulation of the blowing fluid pressure level during the blowing phase is possible. In other words, by using a single device, an adequate blowing fluid flow and an adequate blowing fluid pressure regulation for, especially PET, blowing processes is. provided.

As a result, a significant PET material saving through a better process control (flow and pressure) may be achieved. Furthermore, more complicated shapes of blown containers can be realised. The invention results in significant cost savings because no PLC (Programmable Logic Controller) embedded on the turning table of the blowing machine needs to be provided, only one pressure source (e.g. 40 bar) is used, and rotating union devices of the blowing machine may be simplified or suppressed.

According to the invention, a low blowing fluid flow can be provided for preblowing by positioning a second valve element. A high blowing fluid pressure can be provided by positioning a first valve element. By positioning the second valve element in a second position and by positioning the first valve element in a first position, a low cross section fluid or flow path (further referred to as "first" flow path) is provided. A large cross section flow path (further referred to as "second" flow path) can be provided by positioning the first valve element in a second position.

In this context, it should be understood that the term "flow path diameter", "diameter", or "cross section", as used herein, shall refer to all parameters describing a resistance to a fluid flow. The pressure drop in a fluid flowing through a long cylindrical pipe, assuming a laminar viscous and incompressible flow and a constant circular cross-section significantly longer than its diameter, may be calculated by the Hagen-Poiseuille equation. However, a flow pressure drop through a valve, restricted by a "diameter" or "cross section", as used herein, will result from further parameters, including geometrical features of the flow path and features of (non-Newtonian) fluids. Therefore, a "diameter" or "cross section", as used herein, is not intended to be restricted to a diameter or cross section of a cylindrical tube.

Positioning the second valve element in a second position while the first valve element is positioned in its first position includes positioning the second valve element in different second positions, thereby providing different first flow paths with different diameters. This is achieved by providing a second valve element with, e.g., a tapered distal end which, when gradually lifted from a blocking position, gradually opens and provides an increasing flow path area.

In other words, the area of the first cross section of the first flow path through the valve is controllable by lifting the second element into different second positions. Consequently, the second element and the first element form a proportional valve for the first flow path inside of the blowing fluid valve.

As further explained in the drawings, movement and of the first and second valve elements may be achieved simply by varying an actuating (pilot) pressure supplied via actuating pressure supply means.

The current invention results in an improvement of the design of a blowing fluid supply in order to enhance the mechanical resistance and the dynamic behaviour of a valve and/or a blowing mold apparatus.

Further advantages and embodiments of the invention will be evident from the description and the accompanying drawings. It should be noted that the features mentioned above and to be explained below are not limited to the indicated combinations but are likewise usable in other combinations or alone without departing from the scope of the current invention.

The invention is illustrated by embodiments in the drawings and will be described with reference to the drawings.

### Figures

Figure 1 shows a schematic longitudinal section of a coaxial valve according to a preferred embodiment of the invention wherein first and second valve elements are in first positions.
Figure 2 shows a schematic longitudinal section of a coaxial valve according to a preferred embodiment of the invention wherein a first valve element is in a first position and a second valve element is in a second position.
Figure 3 shows a schematic longitudinal section of a coaxial valve according to a preferred embodiment of the invention wherein first and second valve elements are in second positions.
Figure 4 schematically illustrates a blow molding device according to a preferred embodiment of the invention.
Figure 5 schematically illustrates a blow molding method according to a preferred embodiment of the invention.

In the figures, identical elements are indicated with identical reference numbers. For reasons of conciseness, a repeated explanation of identical elements is omitted.

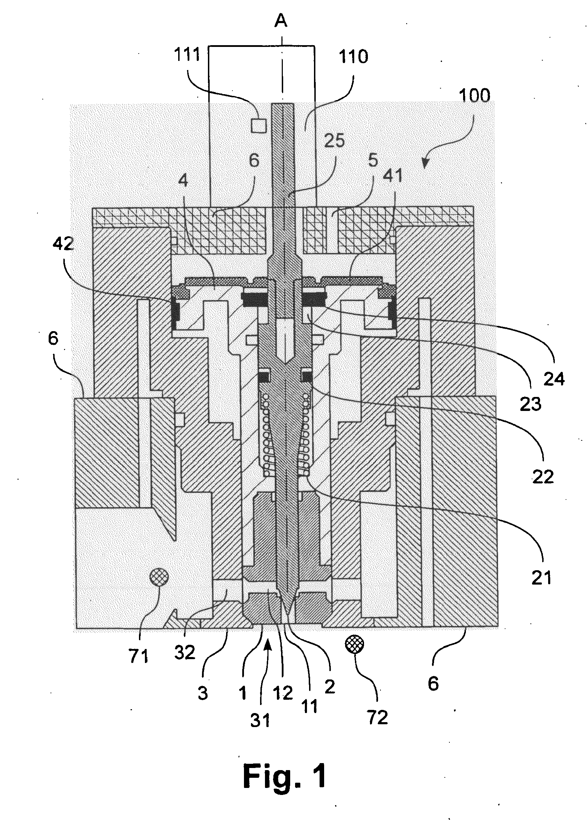

Figure 1 shows a coaxial valve 100 according to a preferred embodiment of the invention. The valve comprises a valve housing 3 arranged within a valve housing seat 6. The valve housing seat 6 may, in this context, represent a part of a blow molding device which is supplied with a blowing fluid by using the valve.

The valve housing comprises a housing inlet opening 31 and a housing outlet opening 32, with a blowing fluid entering the valve via the housing inlet opening 31 and exiting the valve via the housing outlet opening 32. In other configurations the inventive valve may equally be used in a reverse arrangement wherein a blowing fluid enters the valve via the housing outlet opening 32 and exits the housing via the housing inlet opening 31.

The valve 100 further comprises, in coaxial arrangement with regard to the valve housing 3, a first valve element 1. The first valve element comprises, like the housing 3, an inlet opening 11 and an outlet opening 12. In figure 1, the first valve element 1 is shown in a first position wherein the outlet opening 12 of the first valve element 1 is aligned with the housing outlet opening 32 of the housing 3.

In fluid communication with the housing outlet opening 32, an outlet pressure sensor 71 and/or an outlet temperature sensor 71 may be provided. Likewise, in fluid communication with housing inlet opening 31, a corresponding inlet pressure and/or temperature sensor 72 may be provided.

The first valve element 1 is connected to a first valve element driving means 4 used to move the first valve element 1 along an axis A parallel to the drawing plane. The first valve element driving means 4, further referred to as a "piston", is sealedly received in the housing via a piston bearing 42 and/or a piston lip gasket 41.

A space above the piston and/or the piston lip gasket 41 is covered by a valve housing cover 6. Between the piston 4 and the valve housing cover 6, a piloting or actuating pressure may be applied via a pilot pressure supply 5 representing a pressure actuating means 5. By supplying pressure via the pressure actuating means 5, a force acting on the piston lip gasket 41 may be provided which, in absence of a counterforce, results in a downward movement of the piston 4. If a counter force or pressure via the valve inlet opening 31 is present (e. g. by action of a blowing fluid pressure), the positioning of the piston 4 and of the first valve element 1 is dependent from the relative forces of the actuating pressure supplied by the pressure actuating means 5 and of the pressure supplied via the valve housing inlet opening 31 and of the area ratio of the gasket and the first valve element 1.

In the configuration shown in figure 1, the force resulting from the pressure actuating means 5 acting on the piston 4 is considered to be higher than the force resulting from the pressure supplied via the valve housing inlet opening 31 acting on the first valve element 1. Therefore, the piston 4 and the first valve element 31 are in a downward position (i.e. a position close to the valve housing inlet opening 31), their movement being counterforced by protrusions of the valve housing 3 in proximity of the valve housing inlet opening 31.

A second valve element 2 is provided coaxially arranged with the first valve element 1. The second valve element 2 is sealedly received in the first valve element 1 and/or in the piston 4 via a further lip gasket 22. The second valve element 2 is movably arranged within the valve and may be connected to a plunger 25. The plunger 25 may be equipped with a sensor 111 providing a sensor value indicating the position of the second valve element 2. Sensors 111 which may be used to indicate positions of plunger type elements 25 are known in the art, e.g. a LVDT sensor may be used. The sensor 111 and the plunger 25 may be enclosed by a housing 110 for protecting the sensor 111, the plunger 25 and circuitry (not shown) associated therewith.

It is to be noted that the actuating pressure supplied via the actuating pressure supply means 5 also acts on the second valve element 2 and/or the plunger 25. Therefore, a downwardly (i.e. in the direction of the valve housing inlet opening 31) acting force acts on the second valve element 2 and/or the plunger 25. This force is counterforced by the force of a spring 21 provided to exert an upward force to the second valve element 2 (i.e. in the direction of the valve housing cover 6).

It is to be noted that, in the configuration shown in figure 1, the valve housing inlet opening 31, the first valve element inlet opening 11, the first valve element outlet opening 12 and the housing outlet opening 32 are in a blocked fluid communication, the second valve element 2 blocking and locking a potential fluid flow between the first valve element inlet opening 11 and the first valve element outlet opening 12.

The configuration shown in figure 1 results from a sufficiently high pressure provided by the pressure actuating means 5, resulting in a downward or first position of the first valve element 1 and in a downward or first position of the second valve element 2.

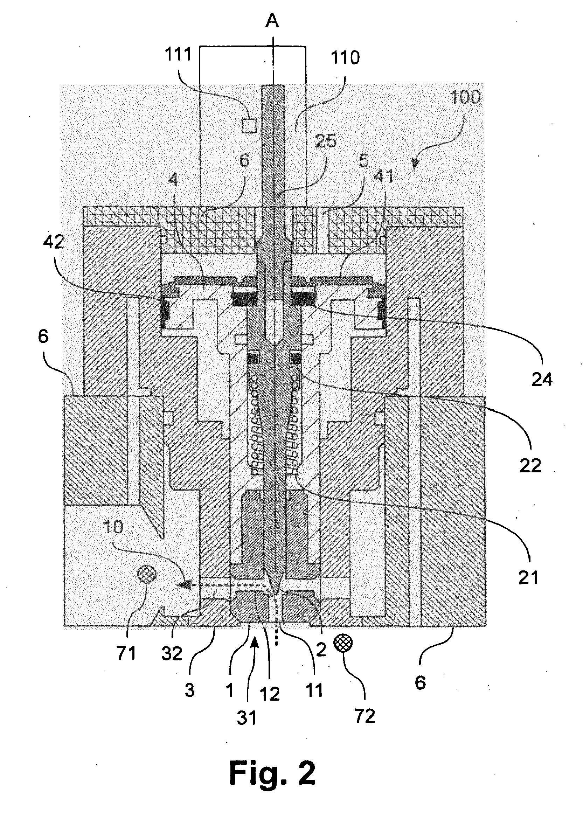

Figure 2 shows the valve 100 of figure 1 in a second configuration.

In this second configuration, the actuating pressure supplied via the actuating pressure supply means 5 is assumed to be not high enough to downwardly press the plunger 25 and/or the second valve element 2 by counterforcing the force exerted by the spring 21 and a counterforce or pressure via the valve inlet opening 11. Therefore, the force. exerted by the spring 21 and the said counterforce are sufficient to upwardly move or lift the second valve element 2 and/or the-plunger 25 into an upward or second position.

In consequence, the first valve element inlet opening 11 and the first valve element outlet opening 12 come in fluid communication, whereby a fluid path comprising the valve housing inlet opening 31, the first valve element inlet opening 11, the first valve element outlet opening 12 and the housing outlet opening 32 is provided. Therefore, a fluid pressure and/or a corresponding fluid flow provided via the housing inlet opening 31 may to some extent pass through the valve and exit the valve housing at valve housing outlet opening 32.

It is to be noted that the lifted or second position of the second valve element 2 and/or of the plunger 25 results from an equilibrium of the force of the actuating pressure supplied via the actuating pressure supply means 5 acting on the second valve element 2 and/or the plunger 25 and of the counterforcing force of the spring 21 and of the pressure supplied via the valve inlet opening 11 provided to exert an upward force to the second valve element 2. By adjusting this equilibrium by controlling the actuating pressure, and due to the tapered distal end of the second valve element 2, a flow path diameter of the first flow path may be adjusted.

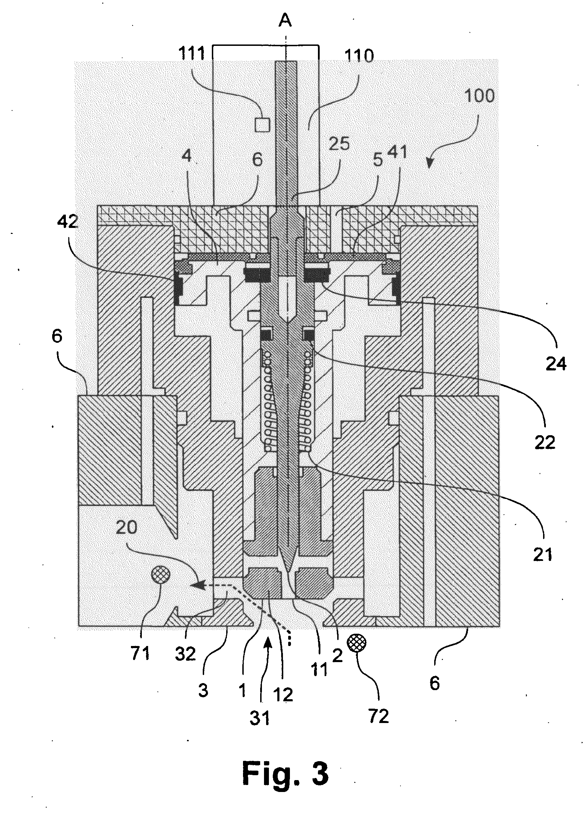

In Figure 3, the valve 100 of the preceding figures is shown in a third configuration.

In this configuration, the pressure supplied via the actuating pressure supply means is assumed to have decreased by active control and/or by other means. The decreased pressure is assumed to be not anymore sufficient to counterforce an upward force acting on the first valve element 1 and/or on the second valve element 2 by the pressure applied via the valve housing inlet opening 31. In consequence, the first valve element 1 and the piston 4 are both moved into an upward or second position.

In other words, in figure 1 a configuration resulting from a high actuating pressure supplied via actuating pressure supply means 5, in figure 2 a configuration resulting from an intermediate actuating pressure supplied via actuating pressure supply means 5, and in figure 3 a configuration resulting from a low actuating pressure supplied via actuating pressure supply means 5 is shown, assuming that the pressure acting on the first valve element 1 via the valve housing inlet opening 31 remains essentially constant. These different actuating pressures result in the three different arrangements shown in figures 1 to 3, wherein in figure 1 both first and second valve elements 1, 2 are in first positions, in figure 2 the second valve element 2 is in a second position while the first valve element 1 remains in the first position, and in figure 3 both valve elements 1, 2 are in the second positions. Again, it is to be noted that a "second position" of the second 2, but probably also of the first valve element 1 may include one of a plurality of second positions, thus providing, correspondingly, different flow paths 10, 20.

Assuming a proper dimensioning of the housing inlet and outlet openings 31, 32 and of the first valve element inlet and outlet openings 11, 12 and/or of the apical part of the second valve element 2, different flow paths 10, 20 including different cross sections and therefore resulting different fluid flows may be provided. By applying predetermined actuating pressures via actuating pressure supply means 5, a selective adjustment of the flows provided at the housing outlet opening 10 may be achieved.

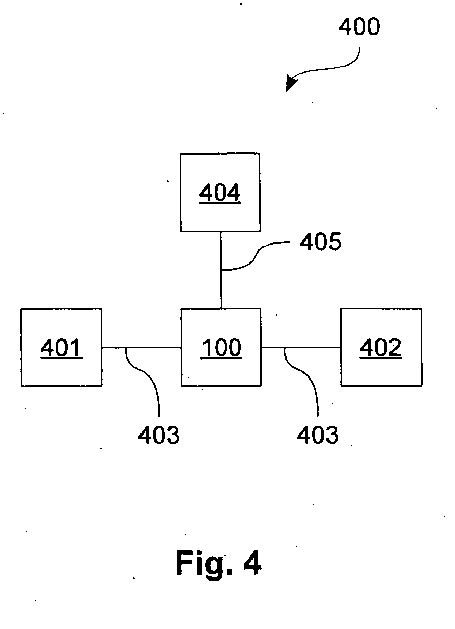

In figure 4, a blow molding device including the valve 100 according to a preferred embodiment of the invention is shown. The blow molding device includes a blowing fluid pressure supply unit 401 and a blow mold 402 connected therewith via the valve 100 and flow ducts 403. An actuating pressure supply means 404 is provided to provide an actuating pressure for the valve 100 via an actuating pressure duct 405.

It will be understood that in figure 4 only a minimum configuration of a blow molding device 400 is shown, while the skilled person will consider further modifications and/or additions to this device expedient.

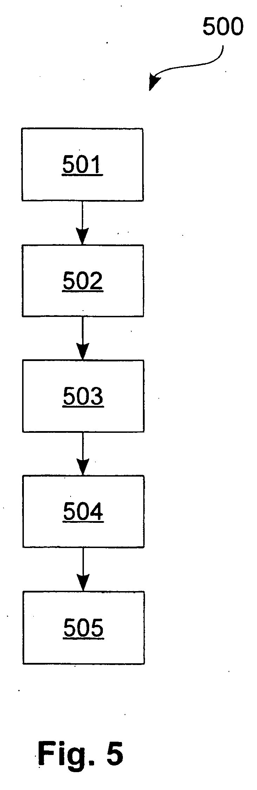

In figure 5, a blow molding method 500 according to a preferred embodiment of the invention including the valve 100 illustrated in figures 1 to 3 and/or the device 400 illustrated in figure 4 is shown.

At step 501, an appropriately tempered preform is inserted in e.g. a blow mold 402 of a blow molding device 400. During this stage, the valve 100 is in a blocked flow path configuration as shown in figure 1.

At step 502, an actuating pressure supplied by an actuating pressure source 404 and/or by actuating pressure supply means 5 is provided, its value resulting in a valve configuration as shown in figure 2, i.e. comprising a first flow path. By supplying blowing fluid via the first flow path, a preblowing step is performed.

After the preblowing step has completed, the actuating pressure is, in step 503, reduced to result in a valve configuration comprising a second flow path as shown in figure 3. Therefore, the blowing fluid flow and/or pressure provided to the blow mold is increased, resulting in final blowing of the article to be produced.

Once desired blowing fluid flow and/or pressures have been reached for the final blowing, the actuating pressure is, in step 504, e.g. again increased to result in a configuration as shown in figure 1, whereby the valve housing inlet opening 31 is turned off and a flow through the valve is blocked. The blowing fluid flow and/or pressure provided to the blow mold is maintained in this valve configuration. However, a fluid flow and/or pressure to the blow mold may be adjusted precisely afterwards based on valve configuration at step 502.

The valve may now operate in a reverse direction such that pressure in the blow mold may be slowly decreased. A pressure reduction in the mold may be effected by controlledly decreasing the first flow path diameter by moving the second valve element between different second positions. The valve may now operate in a reverse direction such that pressure in the blow mold may be slowly decreased. While, conversely, maintaining a constant pressure at the valve housing inlet opening 31, and by providing a blocked configuration of the valve 100, pressure may also allowed to slowly decrease in the mold 402.

Finally, at step 505, the blow mold may be expanded and the blown container may be removed from the mold 402.

## Claims

1. A valve (100) for providing a blowing fluid in a blow molding device, the valve comprising:
a valve housing (3), a first element (1) and a second element (2), the first and second elements (1,2) arranged within the valve housing (3), and the second element (2) arranged within the first element (1), each of the first and second elements (1,2) movable between at least first and second positions, wherein
a blocked flow path through the valve (100) is provided when each of the first and second elements (1,2) are in their first positions, **characterised in that**
a first flow path (10) with a first cross section through the valve (100) is provided when the first element (1) is in its first position and the second element (2) is in a second position, and
a second flow path (20) with a second cross section different from the first cross section through the valve (100) is provided when the first element (1) is in a second position.

2. A valve according to claim 1, wherein at least the second positions of the second valve element (2) include a plurality of second positions, wherein the first cross section of the first flow path (10) through the valve (100) is controllable by moving the second element (1) into different second positions.

3. A valve (100) according to claim 1 or 2, wherein the second cross section is larger than the first cross section.

4. A valve (100) according to any one of the preceding claims, wherein each of the housing (3) and the first element (1) comprise an inlet opening (31,11) and an outlet opening (32,12), wherein
the blocked flow path comprises the housing inlet opening (31), the first element inlet opening (11), the first element outlet opening (12) and the housing outlet opening (32), the flow path being blocked by the second element (2) between the first element inlet opening (11) and the first element outlet opening (12),
the first flow path (10) comprises, in fluid communication, the housing inlet opening (31), the first element inlet opening (11), the first element outlet opening (12) and the housing outlet opening (32), and
the second flow path (20) comprises, in fluid communication, the housing inlet opening (31) and the housing outlet opening (32).

5. A valve (100) according to any one of the preceding claims, wherein the first (1) and second (2) elements are pressure actuable and wherein a single pressure actuating means (5) is provided to move the first (1) and second (2) elements between the at least first and second positions.

6. A valve (100) according to any one of the preceding claims, wherein,
at a first pressure provided by the pressure actuating means (5), each of the first and second elements (1,2) are in the first positions,
at a second pressure provided by the pressure actuating means (5), the first element (1) is in the first position and the second element (2) is in a second position, and
at a third pressure provided by the pressure actuating means (5), the first element (1) is in a second position.

7. A valve according to any one of the preceding claims, wherein the second element (2) is coaxially arranged within the first element (1).

8. A blow molding device (400) including a valve (100) according to any one of the preceding claims.

9. A blow molding device (400) according to claim 8, further comprising
a blowing fluid source (401) in fluid communication with a housing inlet opening (31) of the valve (100),
a blow mold (402) in fluid communication with a housing outlet opening (32) of the valve, and
a variable actuating pressure source (403) in fluid communication with a pressure actuating means (5) of the valve (100).

10. A method (500) of blow molding including:
providing a blow molding device (400) according to claim 8 or 9,
introducing (501) at least one preform into at least one blow mold (402),
actuating the valve (100) with a second pressure and providing a preblowing fluid flow to the blow mold,
actuating the coaxial valve (100) with a third pressure and providing a final blowing fluid flow to the blow mold.

## Patentansprüche

1. Ventil (100) zum Bereitstellen eines Blasfluids in einer Blasformeinrichtung, wobei das Ventil Folgendes umfasst:
ein Ventilgehäuse (3), ein erstes Element (1) und ein zweites Element (2), wobei die ersten und zweiten Elemente (1, 2) innerhalb des Ventilgehäuses (3) angeordnet sind und das zweite Element (2) innerhalb des ersten Elements (1) angeordnet ist, wobei die ersten und zweiten Elemente (1, 2) jeweils zwischen mindestens ersten und zweiten Positionen bewegbar sind, wobei
ein blockierter Strömungsweg durch das Ventil (100) bereitgestellt ist, wenn die ersten und zweiten Elemente (1, 2) jeweils in ihren ersten Positionen sind, **dadurch gekennzeichnet, dass**
ein erster Strömungsweg (10) mit einem ersten Querschnitt durch das Ventil (100) bereitgestellt ist, wenn das erste Element (1) in seiner ersten Position und das zweite Element (2) in einer zweiten Position ist, und
ein zweiter Strömungsweg (20) mit einem zweiten Querschnitt, der vom ersten Querschnitt durch das Ventil (100) differiert, bereitgestellt ist, wenn das erste Element (1) in einer zweiten Position ist.

2. Ventil nach Anspruch 1, bei dem mindestens die zweiten Positionen des zweiten Ventilelements (2) mehrere zweite Positionen beinhalten, wobei der erste Querschnitt des ersten Strömungswegs (10) durch das Ventil (100) durch Bewegen des zweiten Elements (2) in unterschiedliche zweite Positionen kontrollierbar ist.

3. Ventil (100) nach Anspruch 1 oder 2, bei dem der zweite Querschnitt größer als der erste Querschnitt ist.

4. Ventil (100) nach einem der vorstehend aufgeführten Ansprüche, bei dem das Gehäuse (3) und das erste Element (1) jeweils eine Einlassöffnung (31, 11) und eine Auslassöffnung (32, 12) umfassen, wobei
der blockierte Strömungsweg die Gehäuseeinlassöffnung (31), die Einlassöffnung (11) des ersten Elements, die Auslassöffnung (12) des ersten Elements und die Gehäuseauslassöffnung (32) umfasst, wobei der Strömungsweg durch das zweite Element (2) zwischen der Einlassöffnung (11) des ersten Elements und der Auslassöffnung (12) des ersten Elements blockiert ist, wobei
der Strömungsweg (10) in Fluidkommunikation die Gehäuseeinlassöffnung (31), die Einlassöffnung (11) des ersten Elements, die Auslassöffnung (12) des ersten Elements und die Gehäuseauslassöffnung (32) umfasst, und wobei
der zweite Strömungsweg (20) in Fluidkommunikation die Gehäuseeinlassöffnung (31) und die Gehäuseauslassöffnung (32) umfasst.

5. Ventil (100) nach einem der vorstehend aufgeführten Ansprüche, bei dem das erste Element (1) und das zweite Element (2) durch Druck betätigt werden können, und wobei ein einzelnes Druckbetätigungsmittel (5) bereitgestellt ist, um das erste Element (1) und das zweite Element (2) zwischen den mindestens ersten und zweiten Positionen zu bewegen.

6. Ventil (100) nach einem der vorstehend aufgeführten Ansprüche, bei dem, wenn ein erster Druck durch das Druckbetätigungsmittel (5) bereitgestellt wird, das erste und das zweite Element (1, 2) jeweils in den ersten Positionen sind, wobei,
wenn ein zweiter Druck durch das Druckbetätigungsmittel (5) bereitgestellt wird, das erste Element (1) in der ersten Position und das zweite Element (2) in einer zweiten Position ist, und wobei,
wenn ein dritter Druck durch das Druckbetätigungsmittel (5) bereitgestellt wird, das erste Element (1) in einer zweiten Position ist.

7. Ventil nach einem der vorstehend aufgeführten Ansprüche, bei dem das zweite Element (2) koaxial innerhalb des ersten Elements (1) angeordnet ist.

8. Blasformeinrichtung (400) mit einem Ventil (100) nach einem der vorstehend aufgeführten Ansprüche.

9. Blasformeinrichtung (400) nach Anspruch 8, die weiterhin Folgendes umfasst:
eine Blasfluidquelle (401) in Fluidkommunikation mit einer Gehäuseeinlassöffnung (31) des Ventils (100),
ein Blaswerkzeug (402) in Fluidkommunikation mit einer Gehäuseauslassöffnung (32) des Ventils, und
eine variable Betätigungsdruckquelle (403) in Fluidkommunikation mit einem Druckbetätigungsmittel (5) des Ventils (100).

10. Verfahren (500) zum Blasformen, das Folgendes beinhaltet:
Bereitstellen einer Blasformeinrichtung (400) nach Anspruch 8 oder 9,
Einführen (501) von mindestens einem Vorformling in mindestens ein Blaswerkzeug (402),
Betätigen des Ventils (100) mit einem zweiten Druck und Bereitstellen einer Vorblasfluidströmung zum Blaswerkzeug,
Betätigen des koaxialen Ventils (100) mit einem dritten Druck und Bereitstellen einer Ausblasfluidströmung zum Blaswerkzeug.

## Revendications

1. Vanne (100) destinée à introduire un fluide de soufflage dans un dispositif de moulage par soufflage, la vanne comportant :
Un corps (3) de vanne, un premier élément (1) et un deuxième élément (2), les premier et deuxième éléments (1, 2) étant disposés à l'intérieur du corps (3) de vanne, et le deuxième élément (2) étant disposé à l'intérieur du premier élément (1), chacun des premier et deuxième éléments (1, 2) étant mobile entre au moins des première et deuxième positions,
un passage d'écoulement obturé à travers la vanne (100) étant formé lorsque chacun des premier et deuxième éléments (1, 2) se trouve dans sa première position,
**caractérisé**
**en ce qu'**un premier passage (10) d'écoulement d'une première section droite à travers la vanne (100) est formé lorsque le premier élément (1) se trouve dans sa première position, le deuxième élément (2) se trouvant dans une deuxième position, et
**en ce qu'**un deuxième passage (20) d'écoulement d'une deuxième section droite différente de la première section droite à travers la vanne (100) est formé lorsque le premier élément (1) se trouve dans une deuxième position.

2. Vanne selon la revendication 1, les deuxièmes positions au moins du deuxième élément (2) de vanne comprenant une pluralité de deuxièmes positions, la première section droite du premier passage (10) d'écoulement à travers la vanne (100) pouvant être commandée en amenant le deuxième élément (2) dans des deuxièmes positions différentes.

3. Vanne (100) selon la revendication 1 ou 2, la deuxième section droite étant plus grande que la première section droite.

4. Vanne (100) selon l'une quelconque des revendications précédentes, le corps (3) et le premier élément (1) comportant chacun une ouverture (31, 11) d'entrée et une ouverture (32, 12) de sortie,
le passage d'écoulement obturé comportant l'ouverture (31) d'entrée du corps, l'ouverture (11) d'entrée du premier élément, l'ouverture (12) de sortie du premier élément et l'ouverture (32) de sortie du corps, le passage d'écoulement étant obturé par le deuxième élément (2) entre l'ouverture (11) d'entrée du premier élément et l'ouverture (12) de sortie du premier élément,
le premier passage (10) d'écoulement comportant, en communication fluidique, l'ouverture (31) d'entrée du corps, l'ouverture (11) d'entrée du premier élément, l'ouverture (12) de sortie du premier élément et l'ouverture (32) de sortie du corps, et
le deuxième passage (20) d'écoulement comportant, en communication fluidique, l'ouverture (31) d'entrée du corps et l'ouverture (32) de sortie du corps.

5. Vanne (100) selon l'une quelconque des revendications précédentes, les premier (1) et deuxième (2) éléments pouvant être actionnés par une pression et un moyen unique (5) d'actionnement par pression étant installé pour déplacer les premier (1) et deuxième (2) éléments entre les première et deuxième positions au moins.

6. Vanne (100) selon l'une quelconque des revendications précédentes, **caractérisée**
**en ce qu'**à une première pression communiquée par le moyen (5) d'actionnement par pression, chacun des premier et deuxième éléments (1, 2) se trouve en première position,
**en ce qu'**à une deuxième pression communiquée par le moyen (5) d'actionnement par pression, le premier élément (1) se trouve dans la première position et le deuxième élément (2) se trouve dans une deuxième position, et
**en ce qu'**à une troisième pression communiquée par le moyen (5) d'actionnement par pression, le premier élément (1) se trouve dans une deuxième position.

7. Vanne selon l'une quelconque des revendications précédentes, le deuxième élément (2) étant disposé de façon coaxiale à l'intérieur du premier élément (1).

8. Dispositif (400) de moulage par soufflage comprenant une vanne (100) selon l'une quelconque des revendications précédentes.

9. Dispositif (400) de moulage par soufflage selon la revendication 8, comportant en outre
une source (401) de fluide de soufflage en communication fluidique avec une ouverture (31) d'entrée du corps de la vanne (100),
un moule (402) de soufflage en communication fluidique avec une ouverture (32) de sortie du corps de la vanne, et
une source (403) de pression variable d'actionnement en communication fluidique avec un moyen (5) d'actionnement par pression de la vanne (100).

10. Procédé (500) de moulage par soufflage comprenant les étapes consistant à :
mettre en place un dispositif (400) de moulage par soufflage selon la revendication 8 ou 9,
introduire (501) au moins une préforme dans au moins un moule (402) de soufflage,
actionner la vanne (100) à l'aide d'une deuxième pression et introduire un écoulement de fluide de pré-soufflage dans le moule de soufflage,
actionner la vanne coaxiale (100) à l'aide d'une troisième pression et introduire un écoulement de fluide de soufflage final dans le moule de soufflage.
